# FASCICULE DE BREVET EUROPEEN

(11) **EP 0 965 484 B1**
(45) Date de publication et mention de la délivrance du brevet: **31.08.2005**
(21) Numéro de dépôt: 99401416.5
(22) Date de dépôt: 10.06.1999
(51) Int. Cl.: B60N 3/02

(54) **Dispositif à poignée rétractable, notamment pour un véhicule automobile**
Zurückschiebbarer Handgriff, insbesondere für Kraftfahrzeuge
Retractable handle particularly for cars

(30) Priorité: 17.06.1998 FR 9807646
(43) Date de publication de la demande: 22.12.1999
(73) Titulaire: AUTOMOBILES PEUGEOT, 75116 Paris (FR); AUTOMOBILES CITROEN, 92200 Neuilly-sur-Seine (FR)
(72) Inventeur: Verdiere, Francois, 92150 Suresnes (FR)
(74) Mandataire: Bentz, Jean-Paul

(56) Documents cités:
- DE-A- 3 018 060
- DE-A- 3 828 032
- DE-A- 19 608 275

## Description

L'invention concerne un véhicule automobile équipé d'un dispositif à poignée rétractable.

Certains véhicules, comme ceux du type monospace, présentent une hauteur de seuil importante. C'est pourquoi les utilisateurs doivent souvent se tenir à la carrosserie ou à un siège pour pouvoir monter dans le véhicule, ce qui est malaisé.

DE 38 28 032 décrit une poignée de retenue pour des occupants d'un véhicule automobile et qui est déplaçable de façon qu'elle ne prenne pas beaucoup de place. Cette poignée est montée mobile en coulissement dans un boîtier fixe entre une position projetée, dans laquelle la poignée est en saillie par rapport audit boîtier, et une position rétractée, dans laquelle la poignée est ramenée vers ledit boîtier, ladite poignée étant constamment sollicitée par des moyens élastiques en position projetée.

Cependant, ce dispositif connu a pour inconvénient que la poignée reste visible en position de non utilisation, ce qui est nuisible à l'esthétique de l'habitacle du véhicule.

L'invention a pour but de pallier ces inconvénients en proposant un véhicule automobile à dispositif à poignée rétractable monté sur la caisse du véhicule automobile, notamment sur un montant de porte, pour aider les utilisateurs à monter dans le véhicule. Ce dispositif est conçu pour que la poignée soit à la portée des utilisateurs lorsque la porte du véhicule est ouverte et pour qu'elle s'escamote automatiquement lors de la fermeture de la porte.

L'invention concerne donc un véhicule automobile comportant une porte qui vient s'appuyer contre un montant de la carrosserie en position fermée, ledit véhicule étant équipé d'un dispositif à poignée rétractable comprenant une poignée et un boîtier fixé sur le montant et dans lequel ladite poignée est montée mobile en coulissement entre une position projetée, dans laquelle la poignée est en saillie par rapport audit boîtier, et une position rétractée, dans laquelle la poignée est ramenée vers ledit boîtier, ladite poignée étant constamment sollicitée par des moyens élastiques en position projetée, ladite porte étant apte à venir en contact avec la poignée dudit dispositif pour l'enfoncer dans sa position rétractée, lorsque la porte est fermée.

De façon préférée, la poignée présente une forme générale en U, les deux branches de la poignée coopérant avec des moyens prévus dans le boîtier pour permettre le coulissement de la poignée.

Dans un mode de réalisation de l'invention, les deux branches de la poignée sont en partie creuses et le boîtier comporte deux axes fixes pénétrant dans lesdites branches.

De préférence, les moyens élastiques sont constitués par une lame ressort fixée sur le boîtier.

Cette lame ressort est avantageusement cintrée, sa concavité tournée vers l'extérieur du boîtier, et elle prend appui sur chaque branche de la poignée.

De façon préférée, le dispositif à poignée rétractable comporte des moyens définissant une position projetée maximale de la poignée.

Dans un mode de réalisation de l'invention, ces moyens consistent en des clips d'arrêt fixés sur chaque branche de la poignée et qui coopèrent avec le couvercle du boîtier.

De préférence, un joint d'étanchéité est prévu entre chaque branche du U formant la poignée et le couvercle du boîtier.

La porte du véhicule est avantageusement coulissante et comporte une butée du côté intérieur du véhicule, destinée à venir en contact avec la poignée du dispositif à poignée rétractable.

De préférence, le contact entre la butée et la poignée se réalise dans la partie centrale du fond du U formant la poignée.

De façon préférée, la position de la butée sur la porte du véhicule est telle que le plan de la butée est sensiblement perpendiculaire à l'axe de la poignée du dispositif à poignée rétractable.

L'invention sera mieux comprise et d'autres buts, avantages et caractéristiques de celle-ci apparaîtront plus clairement à la lecture de la description qui suit et qui est faite au regard de dessins annexés, sur lesquels :
La figure 1 est une vue schématique partielle de côté d'un véhicule automobile, équipé d'un dispositif à poignée rétractable selon l'invention.
La figure 2 est une vue partielle en coupe transversale d'un dispositif selon l'invention monté sur un véhicule automobile, avec la poignée en position projetée, la porte du véhicule étant ouverte.
La figure 3 est une demie-vue en coupe selon III-III de la figure 2.
La figure 4 est une vue partielle en coupe transversale d'un dispositif selon l'invention monté sur un véhicule automobile, avant que la porte du véhicule ne soit complètement fermée.
La figure 5 est une vue partielle en coupe transversale d'un dispositif selon l'invention monté sur un véhicule automobile dont la poignée est en position rétractée, la porte du véhicule étant fermée.
La figure 6 est une demie-vue en coupe selon VI-VI de la figure 5.
La figure 7 est une vue éclatée du dispositif à poignée rétractable selon l'invention.

Les éléments communs aux différentes figures seront désignés par les mêmes repères.

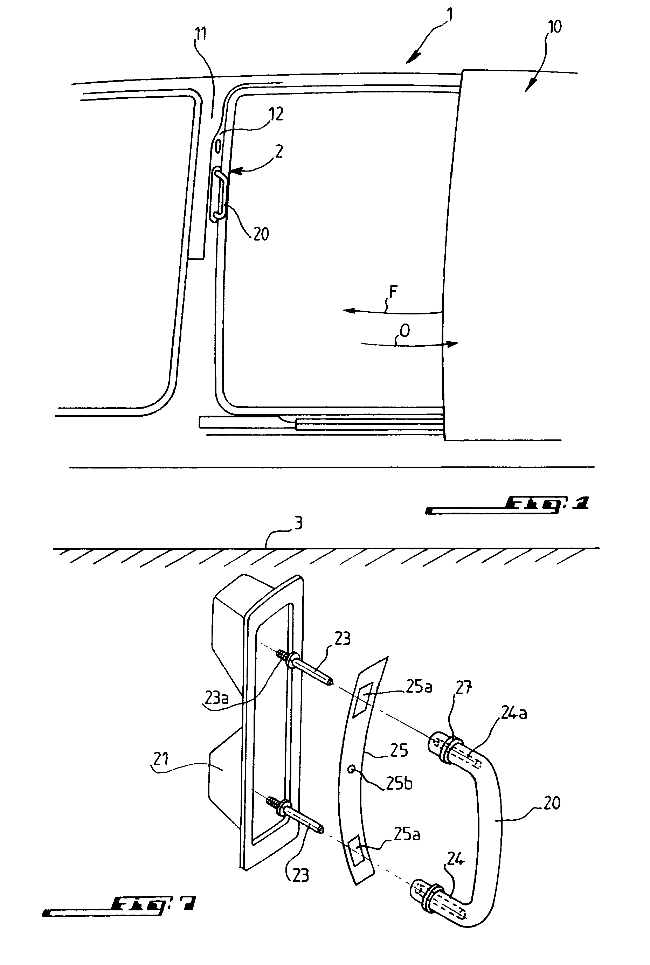

On se réfère tout d'abord à la figure 1 qui représente partiellement le côté d'un véhicule automobile 1. Celui-ci comporte une porte coulissante 10 qui est ici représentée en position ouverte.

En position fermée, cette porte vient s'appuyer contre le montant central 11 de la carrosserie du véhicule.

Sur ce montant central, et plus particulièrement sur sa doublure 12, est fixé un dispositif à poignée rétractable 2 selon l'invention.

Le plancher du véhicule 1 est situé à une distance relativement importante du sol 3. Ainsi, le dispositif 2 selon l'invention est fixé sur le montant 11, à une hauteur appropriée, pour que la poignée 20 du dispositif puisse facilement être saisie par un utilisateur qui veut pénétrer dans le véhicule.

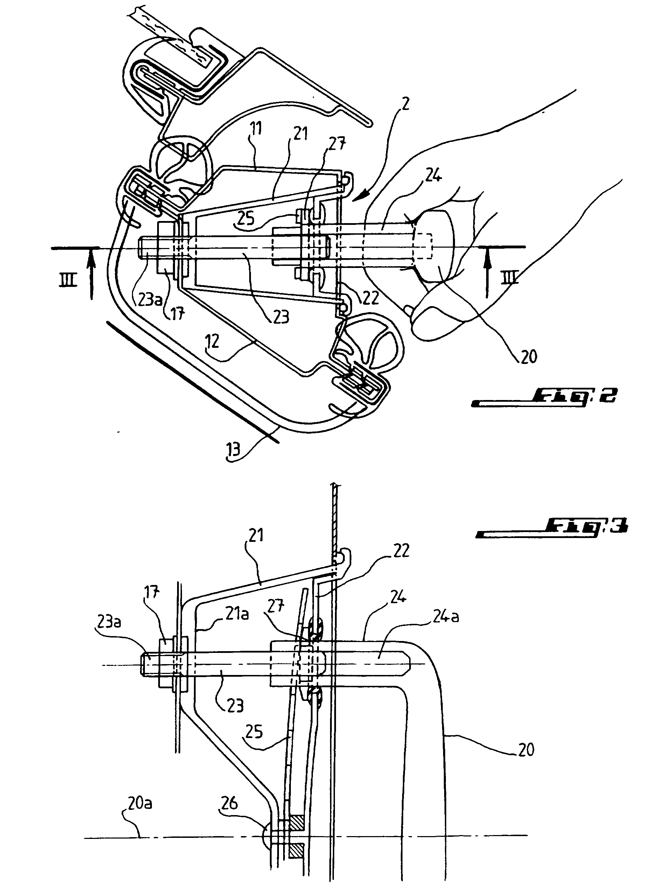

Ceci est illustré à la figure 2 qui montre un dispositif 2 selon l'invention monté sur le montant central 11, avec sa poignée 20 en position projetée. Cette poignée peut alors être facilement saisie par l'utilisateur.

De façon plus précise, le dispositif selon l'invention comporte un boîtier 21 fermé par un couvercle 22.

Dans le fond 21a du boîtier 21 sont fixés deux axes 23 qui sont écartés l'un de l'autre et sensiblement parallèles.

De préférence, chaque axe 23 présente une extrémité filetée 23a qui fait saillie à l'extérieur du fond du boîtier. Grâce à ces extrémités filetées, le boîtier peut facilement être fixé sur la doublure 12 du montant central 11, au moyen d'écrous ou analogues 17.

Par ailleurs, la poignée 20 présente une forme sensiblement en U.

Le boîtier 21 et la poignée 20 présentent une forme symétrique par rapport à l'axe 20a de la poignée.

Chaque branche 24 de la poignée 20 est en partie creuse. Dans l'exemple illustré sur les figures, chaque branche 24 comporte un trou borgne 24a.

L'écartement entre les deux axes 23 du boîtier est tel que la poignée 20 est montée mobile en coulissement sur ces axes 23.

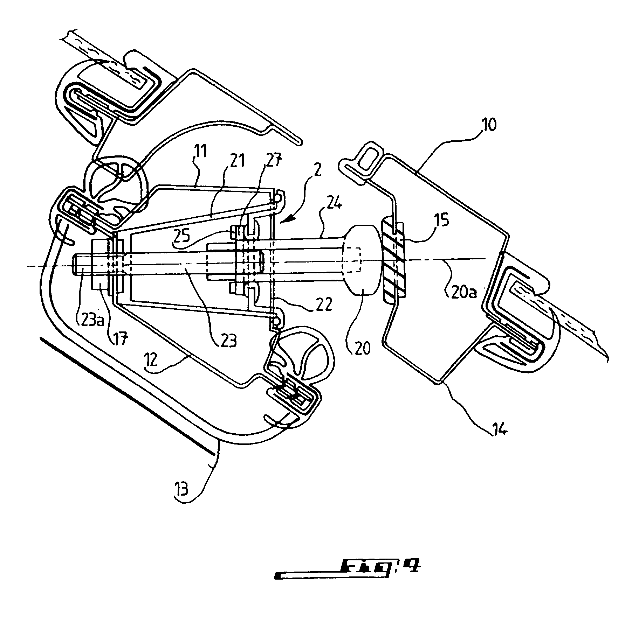

Le dispositif 2 selon l'invention comporte également des moyens élastiques 25, grâce auxquels la poignée 20 est constamment sollicitée dans sa position projetée illustrée aux figures 2 et 3.

Dans l'exemple illustré sur les figures, ces moyens élastiques sont constitués par une lame ressort légèrement cintrée, sa concavité étant tournée vers l'extérieur du boîtier ou entre vers le couvercle 22 du boîtier.

Comme l'illustre plus en détail la figure 7, la lame ressort 25 comporte deux ouvertures 25a pour le passage des branches 24 de la poignée 20.

Elle comporte également dans sa partie centrale un autre évidement 25b, pour le passage de moyens de fixation 26 sur le boîtier 21. Ces moyens de fixation sont notamment constitués par un rivet.

Grâce à ce montage, la lame élastique pousse constamment la poignée 20 à l'extérieur du boîtier.

Cependant, pour retenir la poignée 20 sur le boîtier 21, sont prévus des moyens 27 qui définissent une position projetée maximale de la poignée 20.

Dans l'exemple illustré sur les figures, ces moyens consistent en des clips d'arrêt qui sont fixés sur chaque branche 24 de la poignée 20. Ces clips 27 viennent en contact avec la paroi intérieure du couvercle 22.

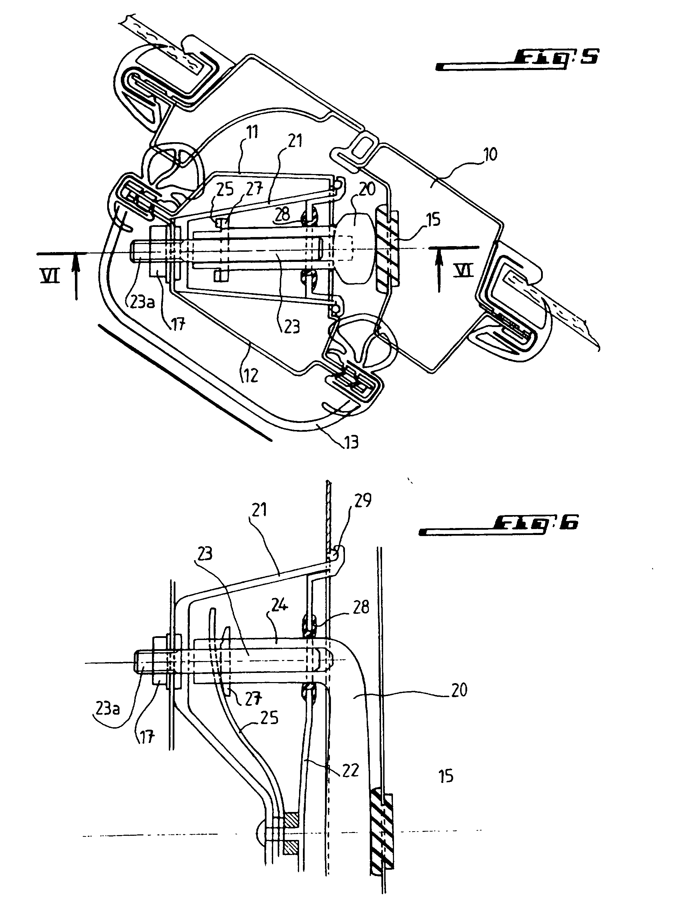

On se réfère maintenant à la figure 4 qui illustre les positions respectives du dispositif à poignée rétractable selon l'invention et de la porte du véhicule, au cours de sa fermeture.

Le dispositif selon l'invention est dans l'état illustré aux figures 2 et 3, c'est-à-dire avec la poignée 20 à l'état projeté.

La porte 10 du véhicule 1 comporte, sur la doublure 14 de son montant, une butée 15.

Comme l'illustre la figure 4, la butée 15 s'étend dans un plan qui est sensiblement perpendiculaire à l'axe de symétrie 20a de la poignée 20 et elle vient en contact avec la poignée 20. De préférence, le contact est établi dans la partie centrale du fond du U formant la poignée pour une bonne répartition des forces.

On se réfère maintenant aux figures 5 et 6 qui illustrent le dispositif selon l'invention avec la poignée en position rétractée, la porte 10 du véhicule étant en position fermée.

Depuis la position illustrée à la figure 4, la porte coulissante 10 a poursuivi son mouvement de fermeture.

La butée 15 a alors exercé une force sur la poignée 20, à l'encontre de la force élastique générée par la lame ressort 25.

Ainsi, la fermeture de la porte 10 a fait coulisser la poignée sur les axes 23 du boîtier 21, jusqu'à ce que la poignée 20 prenne la position rétractée illustrée aux figures 5 et 6.

La poignée 20 reste dans cette position tant que la porte 10 est fermée. Elle est alors invisible tant de l'intérieur que de l'extérieur du véhicule.

Lors de l'ouverture de la porte 10, la butée 15 ne prend plus appui sur la poignée 20 et celle-ci revient automatiquement à la position projetée illustrée aux figures 2 et 3, sous l'effet des moyens élastiques 25.

La poignée 20 est ainsi disponible pour un utilisateur qui souhaite monter dans le véhicule, du seul fait de l'ouverture du la porte.

Comme l'illustrent les différentes figures, on prévoit de préférence un joint d'étanchéité 28 entre chaque branche 24 de la poignée et le couvercle 22 du boîtier.

On prévoit également de préférence des moyens d'étanchéité 29 entre le boîtier 2 et le montant central 11 du véhicule.

Le dispositif à poignée rétractable selon l'invention peut facilement être fixé sur un montant de la carrosserie d'un véhicule. On réalise tout d'abord une ouverture de forme appropriée et à une hauteur convenable, dans le montant 11 du véhicule pour le passage du boîtier. On réalise également deux trous sur la doublure 12 pour le passage des extrémités filetées 23a des axes 23 et on fixe le boîtier au moyen des écrous 17. La référence 13 désigne le garnissage du montant 11.

Le fonctionnement du dispositif à poignée rétractable selon l'invention a été décrit avec un véhicule automobile comportant une porte coulissante. Ce dispositif pourrait également être utilisé avec un véhicule comportant une porte à charnières.

Les signes de références insérés après les caractéristiques techniques figurant dans les revendications ont pour seul but de faciliter la compréhension de ces dernières et ne sauraient en limiter la portée.

## Revendications

1. Véhicule automobile comportant une porte (10) qui vient s'appuyer contre un montant (11) de la carrosserie en position fermée, ledit véhicule étant équipé d'un dispositif à poignée rétractable (2) comprenant une poignée (20) et un boîtier fixé (21) sur le montant (11) et dans lequel ladite poignée (20) est montée mobile en coulissement entre une position projetée, dans laquelle la poignée (20) est en saillie par rapport audit boîtier (21), et une position rétractée, dans laquelle la poignée (20) est ramenée vers ledit boîtier (21), ladite poignée (20) étant constamment sollicitée par des moyens élastiques (25) en position projetée, **caractérisé en ce que** ladite porte est apte à venir en contact avec la poignée (20) dudit dispositif (2) pour l'enfoncer dans sa position rétractée, lorsque la porte est fermée.

2. Véhicule selon la revendication 1 dont la poignée (20) présente une forme générale en U, les deux branches (24) de la poignée coopérant avec des moyens (23) prévus dans le boîtier (21) pour permettre le coulissement de la poignée.

3. Véhicule selon la revendication 2, dans lequel les deux branches (24) de la poignée sont en partie creuses et le boîtier (21) comporte deux axes (23) fixes pénétrant dans lesdites branches (24).

4. Véhicule selon l'une des revendications 1 à 3, dans lequel lesdits moyens élastiques sont constitués par une lame ressort (25) fixée sur le boîtier (21).

5. Véhicule selon la revendication 4, dans lequel la lame ressort est cintrée, sa concavité étant tournée vers l'extérieur du boîtier (21), la lame prenant appui sur chaque branche (24) de la poignée (20).

6. Véhicule selon l'une des revendications 1 à 5, comprenant des moyens (27) définissant une position projetée maximale de la poignée (20).

7. Véhicule selon la revendication 6, dans lequel lesdits moyens consistent en des clips d'arrêt (27) fixés sur chaque branche (24) de la poignée (20) et qui coopèrent avec le couvercle (22) du boîtier (21).

8. Véhicule selon l'une des revendications 2 à 7, comprenant un joint d'étanchéité (28) entre chaque branche (24) de la poignée (20) et le couvercle (22) du boîtier.

9. Véhicule automobile selon l'une des revendications précédentes dont la porte (10) est coulissante et comporte une butée (15) du côté intérieur du véhicule, destinée à venir en contact avec la poignée (20) dudit dispositif (2).

10. Véhicule automobile selon la revendication 9, dans lequel le contact entre la butée (15) et la poignée (20) se réalise dans la partie centrale du fond du U formant la poignée.

11. Véhicule automobile selon la revendication 9 ou 10 dans lequel la position de la butée (15) sur la porte (10) est telle que le plan de la butée est sensiblement perpendiculaire à l'axe (20a) de la poignée (20) du dispositif.

## Patentansprüche

1. Kraftfahrzeug mit einer Tür (10), die sich in Schließstellung an einer Säule (11) der Karosserie abstützt, wobei das Fahrzeug mit einer zurückziehbaren Griffvorrichtung (2) ausgestattet ist, die einen Griff (20) und ein Gehäuse (21) enthält, das an der Säule (11) befestigt ist und in das der Griff (20) zwischen einer vorstehenden Stellung, in welcher der Griff (20) bezüglich des Gehäuses (21) vorspringt, und einer zurückgezogenen Stellung gleitbeweglich gelagert ist, in welcher der Griff (20) zum Gehäuse (21) zurückgeführt ist, wobei der Griff (20) in der vorstehenden Stellung stets über Federmittel (25) beaufschlagt wird, **dadurch gekennzeichnet, dass** die Tür mit dem Griff (20) der Vorrichtung (2) in Kontakt gelangen kann, um ihn in die zurückgezogene Stellung zu drücken, wenn die Tür geschlossen ist.

2. Fahrzeug nach Anspruch 1, dessen Griff (20) eine U-Form aufweist, wobei die beiden Schenkel (24) des Griffs mit Mitteln (23) zusammenwirken, die im Gehäuse (21) vorgesehen sind, um die Gleitbewegung des Griffs zu gestatten.

3. Fahrzeug nach Anspruch 2, wobei die beiden Schenkel (24) des Griffs teilweise hohl ausgeführt sind und das Gehäuse (21) zwei feste Achsen (23) enthält, die in die Schenkel (24) eindringen.

4. Fahrzeug nach einem der Ansprüche 1 bis 3, wobei die Federmittel aus einer Blattfeder (25) bestehen, die am Gehäuse (21) befestigt ist.

5. Fahrzeug nach Anspruch 4, wobei die Blattfeder gebogen ist und deren Konkavität dem Außenbereich des Gehäuses (21) zugewandt ist, wobei die Blattfeder sich an jedem Schenkel (24) des Griffs (20) abstützt.

6. Fahrzeug nach einem der Ansprüche 1 bis 5, mit Mitteln (27), die eine maximal vorstehende Stellung des Griffs (20) definieren.

7. Fahrzeug nach Anspruch 6, wobei die Mittel aus Sicherungsrastklemmen (27) bestehen, die an jedem Schenkel (24) des Griffs (20) befestigt sind und mit dem Deckel (22) des Gehäuses (21) zusammenwirken.

8. Fahrzeug nach einem der Ansprüche 2 bis 7, mit einer Dichtung (28) zwischen jedem Schenkel (24) des Griffs (20) und dem Deckel (22) des Gehäuses.

9. Kraftfahrzeug nach einem der vorangehenden Ansprüche, dessen Tür (10) eine Schiebetür ist und einen Anschlag (15) auf der Fahrzeuginnenseite enthält, der dazu bestimmt ist, mit dem Griff (20) der Vorrichtung (2) in Kontakt zu gelangen.

10. Kraftfahrzeug nach Anspruch 9, bei dem der Kontakt zwischen Anschlag (15) und Griff (20) im Mittelbereich des Bodens der den Griff bildenden U-Form erfolgt.

11. Kraftfahrzeug nach Anspruch 9 oder 10, wobei die Stellung des Anschlags (15) an der Tür (10) derart ist, dass die Ebene des Anschlags im wesentlichen senkrecht zur Achse (20a) des Griffs (20) der Vorrichtung verläuft.

## Claims

1. Motor vehicle having a door (10), which, in the closed position, comes to bear against a pillar (11) of the body work, the said vehicle being provided with a retracting grip handle device (2) that has a grip handle (20) and a housing (21) secured to the pillar (11) and within which the said grip handle (20) is mounted for sliding movement between an extended position in which the grip handle (20) projects with respect to the said housing (21) and a retracted position in which the grip
handle (20) is taken back towards the said housing (21), the said grip handle (20) being permanently urged by resilient means (25) towards the extended position, **characterised in that** the said door is adapted to come into contact with the grip handle (20) of the said device (2) to push it back into its retracted position when the door is closed.

2. Vehicle according to claim 1, whose grip handle (20) is basically formed U-shaped, the two limbs (24) of the grip handle co-operating with means (23) provided in the housing (21) to permit sliding movement of the grip handle.

3. Vehicle according to claim 2, in which the two limbs (24) of the grip handle are partially hollow and the housing (21) has two stationary pins (23) that penetrate into the said limbs (24).

4. Vehicle according to one of claims 1 to 3, in which the said resilient means are constituted by a spring blade (25) secured to the housing (21).

5. Vehicle according to claim 4, in which the spring blade is arched, its concavity facing the exterior of the housing (21), the blade bearing against each limb (24) of the grip handle (20).

6. Vehicle according to one of claims 1 to 5, having means (27) defining a maximum extended position of the grip handle (20).

7. Vehicle according to claim 6, in which the said means consist of stop clips (27) which are secured to each limb (24) of the grip handle (20) and co-operate with the cover (22) of the housing (21).

8. Vehicle according to one of claims 2 to 7, having a sealing joint (28) between each limb (24) of the grip handle (20) and the cover (22) of the housing.

9. Motor vehicle according to one of the preceding claims, whose door (10) is a sliding door and has an abutment member (15) on the side towards the interior of the vehicle, intended to come into contact with the grip handle (20) of the said device (2).

10. Motor vehicle according to claim 9, in which contact between the abutment member (15) and the grip handle (20) takes place in the central part at the bottom of the U that forms the grip handle.

11. Motor vehicle according to claim 9 or 10, in which the position of the abutment member (15) on the door (10) is such that the plane of the abutment member is essentially perpendicular to the axis (20a) of the grip handle (20) of the device.
